Europäisches Patentamt

European Patent Office

Office européen des brevets

(19)

(11) Numéro de publication : **0 013 640**

**B1**

(12) # FASCICULE DE BREVET EUROPÉEN

(45) Date de publication du fascicule du brevet :
**22.09.82**

(21) Numéro de dépôt : **80400010.7**

(22) Date de dépôt : **04.01.80**

(51) Int. Cl.³ : **B 01 D 11/04**, B 01 J 14/00,
B 01 J 19/18, C 22 B 3/02,
F 15 B 21/12

(54) **Pulseur à membrane.**

(30) Priorité : **09.01.79 FR 7900407**

(43) Date de publication de la demande :
**23.07.80 (Bulletin 80/15)**

(45) Mention de la délivrance du brevet :
**22.09.82 Bulletin 82/38**

(84) Etats contractants désignés :
**BE DE GB NL SE**

(56) Documents cités :
**FR A 1 330 250**
**FR A 2 076 452**
**FR A 2 260 369**

(73) Titulaire : **COMMISSARIAT A L'ENERGIE ATOMIQUE
Etablissement de Caractère Scientifique Technique
et Industriel
B.P. 510
F-75752 Paris Cedex 15 (FR)**

(72) Inventeur : **Gasc, Henri
184, Avenue Victor Hugo
F-84200 Carpentras (FR)**

(74) Mandataire : **Mongrédien, André et al
c/o Brevatome 25, rue de Ponthieu
F-75008 Paris (FR)**

Imprimerie Jouve, 18, rue St-Denis, 75001 Paris, France

## Pulseur à membrane

La présente invention concerne les pulseurs à membranes et notamment les pulseurs utilisés pour communiquer un mouvement alternatif des fluides.

Ces pulseurs s'appliquent plus particulièrement à la pétrochimie, à l'industrie pharmaceutique, à l'hydrométallurgie, etc..., dans lesquels interviennent des colonnes de séparation par solvant.

On sait que pour accélérer certaines réactions physiques ou chimiques qui ont lieu dans des colonnes chargées de liquide, il est nécessaire de soumettre les liquides contenus dans ces colonnes à des mouvements alternatifs ou pulsions de faible amplitude, à une fréquence voisine d'un cycle par seconde. Généralement, ces mouvements alternatifs sont engendrés par des pulseurs constitués d'un piston animé d'un mouvement alternatif, dans une chambre auxiliaire, reliée par une canalisation à la base d'une colonne chargée de liquides. Ce piston est bien entendu déplacé par des moyens appropriés et ce déplacement permet de déformer une membrane et donc de soumettre ce liquide à des variations alternatives de pression. Un exemple de ce type est décrit dans la demande de brevet français n° 2 260 369. Habituellement, les pulseurs utilisés sont isolés du milieu corrosif constitué par les phases liquides contenues dans les colonnes. Comme ils doivent transmettre le mouvement de va-et-vient d'un piston, cette transmission est réalisée par l'intermédiaire d'un fluide tampon situé entre le piston et une membrane de séparation du piston et des phases liquides. Le volume compris entre le piston et la membrane de séparation de ce piston et de la colonne est rempli d'huile dont le rôle est essentiellement de transmettre le mouvement de va-et-vient aux liquides contenus dans cette colonne. Afin de diminuer l'énergie nécessaire au mouvement de va-et-vient du piston, la pression statique exercée sur le piston par la hauteur liquide de la colonne est compensée par une contre-pression exercée sous le piston, à l'aide d'un volume d'huile relié à un ballon pressurisé.

Le défaut principal de ce type de pulseur résulte du fait qu'il est impossible de réaliser une étanchéité parfaite entre le cylindre et le piston. Il en résulte que le volume d'huile entre le piston et la membrane de séparation n'est pas rigoureusement constant ; par suite de cette variation de volume, la déformation de la membrane de séparation est irrégulière et cette membrane se détériore facilement. Afin de remédier à cet inconvénient, le débattement maximum de la membrane est limité par deux sommiers rigides situés de part et d'autre de cette membrane et percés de petites ouvertures permettant le passage du liquide contenu dans le volume situé entre le piston et la membrane de séparation ; lorsque le piston fonctionne, la membrane de séparation prend appui sur les sommiers à chaque alternance du piston, ce qui limite sa déformation et protège cette membrane de la rupture. Malgré cette amélioration, la fuite entre le piston et le cylindre étant continue, le volume d'huile contenu entre la membrane de séparation et le piston, varie de manière continue ; il en résulte que la membrane est animée d'un mouvement asymétrique dont l'amplitude diminue au cours du temps. Pour remédier à cet inconvénient, le pulseur est associé à un dispositif de compensation de fuite, qui rétablit le volume initial dans la chambre au-dessus du piston, dès que la membrane vient en contact avec les sommiers. Malgré toutes ces améliorations, la présence de deux sommiers perforés est gênante car ces sommiers entraînent des pertes de charge supplémentaires qui nécessitent l'accroissement de l'énergie à fournir au pulseur.

La présente invention a pour but de remédier à ces inconvénients et notamment de réaliser un pulseur à membrane dans lequel la pression statique engendrée par le liquide sur le piston est compensée par des moyens de compensation très simples. L'invention permet également, dans le cas où les liquides à traiter dans la colonne ou la chambre sont corrosifs, de supprimer les sommiers d'appui de la membrane de séparation située entre le piston et la chambre. En effet, dans le pulseur de l'invention, le volume compris entre le piston et la membrane de séparation est constant. Lorsque les liquides à traiter ne sont pas corrosifs, la membrane de séparation elle-même peut être supprimée. Tous ces buts sont atteints grâce à l'utilisation d'une membrane de pulsion de forme torique, liée au piston et à la chambre et qui est capable de supporter des différences de pression de plusieurs bars. Dans le cas où les liquides à traiter sont corrosifs, cette membrane torique peut être protégée intérieurement par un revêtement anti-corrosif, ce qui permet alors de supprimer la membrane de séparation entre le piston et la chambre.

L'invention a pour objet un pulseur destiné à transmettre à un fluide contenu dans une chambre, à travers un conduit débouchant dans cette chambre, le mouvement alternatif d'un piston ; ce pulseur comprend comme décrit dans la demande de brevet FR-A-2 260 369 au moins une membrane de pulsion liée de manière étanche au piston et à un rebord du conduit et il est caractérisé en ce qu'il comprend en outre des moyens pour exercer une pression de compensation de la pression statique du fluide sur le piston et dans la membrane de pulsion, des moyens pour minimiser, au cours du fonctionnement du pulseur, la valeur de la différence de pression entre la pression exercée sur la paroi interne de la membrane de pulsion, du côté du fluide, et la pression exercée sur la paroi externe de la membrane, la valeur de cette différence demeurant positive et la membrane de pulsion présentant la forme d'un tore creux sectionné par un cylindre dont l'axe correspond à celui du tore et dont le diamètre est supérieur au diamètre interne du tore tout en étant inférieur ou égal au diamètre moyen de ce tore, de sorte que l'un des rebords du tore creux ainsi sectionné soit lié de manière étanche audit rebord du conduit et que l'autre rebord de ce tore sectionné soit lié de manière étanche au piston.

Selon une autre caractéristique de l'invention, la membrane de compensation comprend une armature souple permettant la déformation de cette membrane sans modification de l'aire de son enveloppe.

Selon une autre caractéristique, les moyens de compensation de pression statique comprennent au moins une membrane de compensation de pression de même forme et de même structure que la membrane de pulsion, reliée de manière étanche au piston et à un autre rebord du conduit, à l'opposé de la membrane de pulsion par rapport au piston, des moyens de pressurisation du volume délimité d'une part, par le conduit, du côté de l'extrémité de ce conduit qui est située à l'opposé de l'emplacement où ce conduit débouche dans la chambre, et d'autre part, par le piston et par l'intérieur de la membrane de compensation, et des moyens pour minimiser, au cours du fonctionnement la différence entre la pression exercée à l'intérieur de la membrane de compensation et la pression à l'extérieur de cette membrane, la valeur de cette différence demeurant positive.

Selon une caractéristique particulière, les moyens pour minimiser la différence de pression entre l'intérieur et l'extérieur de la membrane de pulsion et la différence de pression entre l'intérieur et l'extérieur de la membrane de compensation, sont constitués par une enceinte unique de pressurisation entourant ces deux membranes.

Selon une autre caractéristique, l'enceinte unique est reliée à des moyens pour créer dans cette enceinte une pression inférieure ou égale à la plus faible pression engendrée par le fluide dans la membrane de pulsion, lorsque le pulseur est en fonctionnement.

Selon une autre caractéristique, les moyens de pressurisation dudit volume délimité par le conduit, le piston et l'intérieur de la membrane de compensation, sont reliés à des moyens pour créer dans ce volume une pression équivalente à la pression statique engendrée par le fluide sur la membrane de pulsion.

Selon une autre caractéristique de l'invention, les moyens de compensation de pression statique comprennent au moins un vérin relié à des moyens de pressurisation, permettant d'exercer sous le piston une poussée égale à la pression statique du fluide sur le piston et dans la membrane de pulsion.

Selon une caractéristique particulière, dans le cas d'utilisation de vérins, les moyens pour minimiser la différence de pression entre l'intérieur et l'extérieur de la membrane de pulsion sont constitués par une enceinte de pressurisation entourant la membrane de pulsion.

Selon une autre caractéristique, ladite enceinte de pressurisation est reliée à des moyens pour créer dans cette enceinte une pression inférieure ou égale à la plus faible pression engendrée par le fluide sur la membrane de pulsion, lorsque le pulseur est en fonctionnement.

Selon une autre caractéristique particulière, le pulseur comprend une pluralité desdites membranes de pulsion superposées, l'un des rebords du tore creux sectionné formant la première membrane de ladite pluralité étant relié de manière étanche au conduit tandis qu'un autre rebord du tore creux sectionné formant la dernière membrane de ladite pluralité est relié au piston de manière étanche, les rebords en regard des membranes de ladite pluralité étant reliés de manière étanche.

Selon une autre caractéristique particulière, le pulseur comprend une pluralité desdites membranes de compensation, superposées, l'un des rebords creux du tore sectionné formant la première membrane de ladite pluralité étant relié de manière étanche audit rebord du conduit tandis qu'un autre rebord du tore creux sectionné formant la dernière membrane de ladite pluralité est relié de manière étanche au piston.

Selon une autre caractéristique, le mouvement du piston est commandé par des moyens aptes à animer ce piston d'un mouvement alternatif linéaire. Ces moyens peuvent être constitués par un système bielle-manivelle comprenant au moins deux bielles disposées symétriquement par rapport à l'axe du piston et entraînées en synchronisme par deux manivelles tournant en sens inverse.

Selon une caractéristique avantageuse, les armatures souples des membranes de pulsion ou de compensation sont constituées par des armatures de pneumatiques de véhicules automobiles ou de camions.

Selon une autre caractéristique, une membrane de séparation est interposée entre le fluide et la membrane de pulsion, à l'emplacement où le conduit débouche dans la chambre, dans le cas où le fluide est corrosif. Le volume du conduit compris entre la membrane de pulsion et la membrane de séparation reliée au piston, est rempli d'un fluide incompressible. Cette membrane de séparation peut être constituée d'un support souple en élastomère, revêtu d'une pellicule de tétrafluoréthylène.

D'autres caractéristiques et avantages de l'invention ressortiront encore de la description qui va suivre, donnée en référence aux dessins annexés dans lesquels :

la figure 1 illustre schématiquement un pulseur connu dans l'état de la technique et destiné à transmettre le mouvement alternatif d'un piston à une chambre ou une colonne contenant des liquides ;

la figure 2 représente de manière schématique un mode de réalisation d'un pulseur conforme à l'invention, ce pulseur présentant une membrane de compensation, de même forme que la membrane de pulsion ;

la figure 3 représente de manière schématique un autre mode de réalisation d'un pulseur conforme à l'invention, les moyens pour équilibrer la pression statique du fluide étant constitués par des vérins ;

la figure 4 représente une autre mode de réalisation d'un pulseur conforme à l'invention et comportant une pluralité de membranes de pulsion ainsi qu'une pluralité de membranes de compensation ;

la figure 5 représente de manière plus détaillée les moyens d'entraînement du piston, selon un mouvement alternatif.

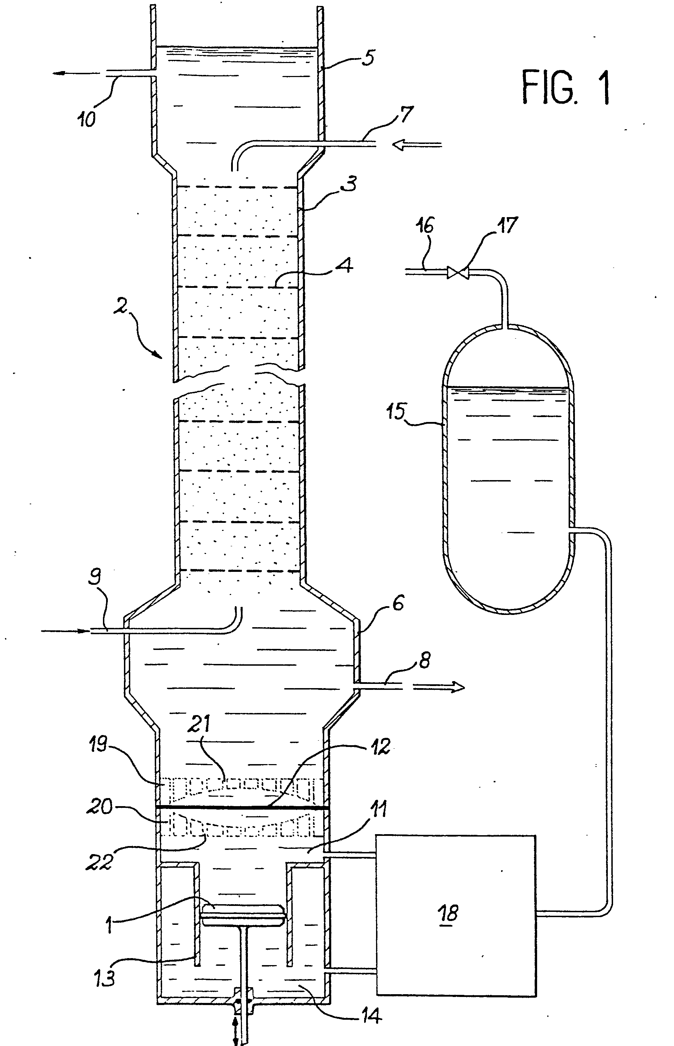

En référence à la figure 1, on a représenté schématiquement un pulseur connu dans l'état de la technique et destiné à transmettre le mouvement alternatif d'un piston 1 à une chambre ou à une colonne de liquide 2. Cette colonne peut être utilisée en hydro-métallurgie où les méthodes d'extraction par solvant sont de plus en plus employés pour la séparation de deux métaux par exemple, ou pour l'élaboration de métaux de très haute pureté, tel que le zirconium. De telles colonnes peuvent également être utilisées en pétrochimie pour le traitement des effluents grâce à une méthode de séparation en phases liquides. La colonne 2 comprend une partie centrale 3 tubulaire, verticale, dans laquelle sont fixés des plateaux 4 perforés, régulièrement espacés. Les parties extrêmes 5, 6 ne comprennent pas de plateaux et présentent généralement une section plus large que la zone centrale 3 de cette colonne, mais de hauteur plus faible. Lorsque cette colonne sert à traiter des effluents, elle comporte à sa partie supérieure, une entrée 7 de la phase liquide lourde, et à sa partie inférieure, une sortie 8 de cette phase. Une entrée 9 de la phase liquide légère est prévue à la partie inférieure tandis qu'une sortie 10 de phase légère est prévue à la partie supérieure de la colonne. Les deux liquides coulent dans la colonne, à contre-courant, sous l'action de leur différence de densité. Un dispositif de pulsation appelé pulseur produit un mouvement de va-et-vient de l'ensemble des liquides contenus dans la colonne. Ce mouvement provoque dans la zone centrale de la colonne la dispersion d'une phase dans l'autre et assure un bon rendement. Généralement, les pulseurs utilisés sont isolés du milieu corrosif constitué par les phases liquides auxquelles ils doivent transmettre leur mouvement. Il en résulte que le mouvement de va-et-vient du pulseur est transmis à l'aide d'un fluide tampon 11 qui est contenu au-dessus du piston 1 et séparé de la colonne par une membrane de séparation 12 résistant à l'attaque chimique. Ce pulseur comprend en outre un cylindre 13 dans lequel se déplace le piston 1 selon un mouvement alternatif, grâce à l'action d'une bielle manivelle ou d'un vérin hydraulique par exemple, non représenté. Le liquide 11 contenu au-dessus du piston est généralement de l'huile dont le rôle est essentiellement de transmettre le mouvement alternatif du piston aux liquides contenus dans la colonne. Afin de réduire l'énergie nécessaire au mouvement de va-et-vient du piston, la pression statique exercée sur le piston par la hauteur de liquide de la colonne est compensée par une contre-pression exercée sous le piston à l'aide d'un volume d'huile 14, relié à un ballon pressurisé 15 grâce à une arrivée d'air comprimé 16 dont la pression peut être réglée par une vanne 17. Le volume d'huile 14 est relié au ballon pressurisé 15 par un dispositif de compensation de fuites 18, permettant de maintenir constant le volume d'huile 11 compris entre le piston 1 et la membrane de séparation 12, lorsqu'une fuite se produit entre le piston 1 et le cylindre 13. Comme on l'a indiqué plus haut, un inconvénient important de ce type de pulseur résulte du fait qu'il est impossible de réaliser une étanchéité parfaite entre le cylindre et le piston. Il en résulte que, si la fuite se produit du volume 11 vers le volume 14 ou inversement, le volume 11 varie, ce qui entraîne un déplacement du plan de travail et de la membrane de séparation 12 et donc une détérioration rapide de cette membrane. Comme on l'a indiqué plus haut, afin de remédier à cet inconvénient, le débattement maximum de la membrane de séparation est limité par deux sommiers 19, 20 rigides, percés d'ouvertures 21, 22 ; ces ouvertures permettent le passage des phases liquides contenues dans la colonne au-dessus de la membrane de séparation 12 ainsi que le passage de l'huile contenu dans le volume 11, au-dessous de la membrane de séparation. Le profil de ces sommiers dépend essentiellement de la déformation maximum que peut subir la membrane, lorsque le volume 11 varie, par suite de fuites entre le piston 1 et le cylindre 13, la membrane vient prendre appui sur l'un des sommiers à chaque alternance ; il en résulte que ces sommiers limitent sa déformation et la protègent de la rupture. Comme la fuite entre le piston et le cylindre est continue, le volume 11 varie constamment ; il en résulte que l'amplitude de la déformation de la membrane diminue ; l'effet de pulsion est donc de plus en plus faible. C'est pour remédier à cet inconvénient important qu'il est nécessaire d'utiliser un dispositif de compensation de fuites qui rétablit le volume initial 11, dès que la membrane vient en contact avec les sommiers. Ces sommiers ont cependant comme inconvénient d'induire des pertes de charge supplémentaire dues aux perforations 21, 22, ce qui entraîne un accroissement de l'énergie nécessaire au fonctionnement du pulseur.

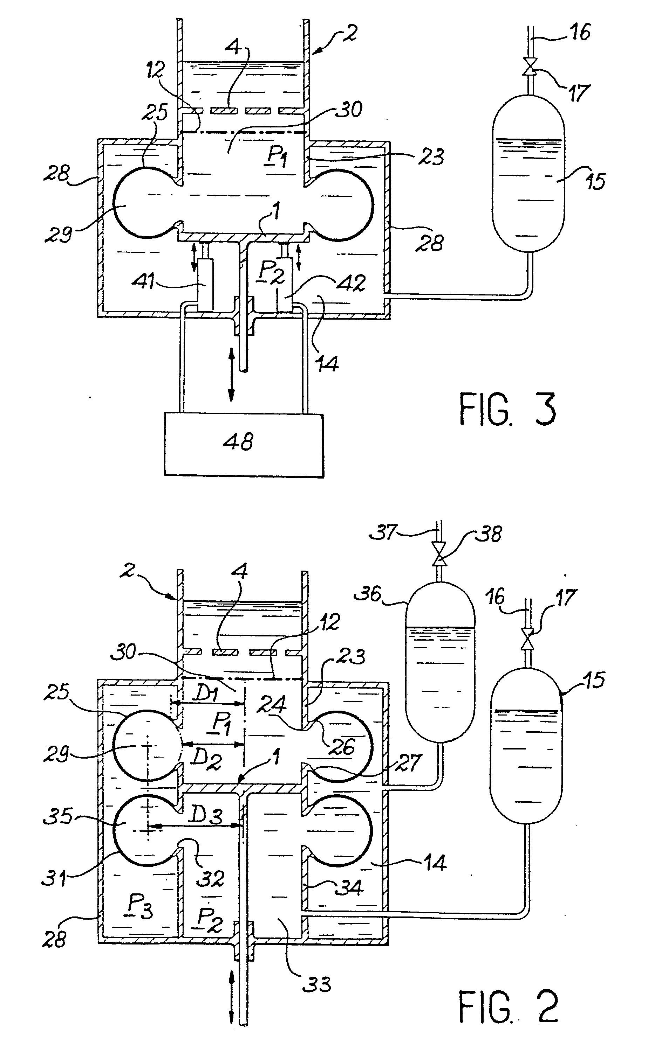

En référence à la figure 2, on a représenté de manière schématique, un premier mode de réalisation d'un pulseur conforme à l'invention. Ce pulseur est destiné à transmettre à un fluide ou à des fluides contenus dans la chambre ou la colonne 2, à travers le conduit 23 à la base de cette colonne, le mouvement alternatif du piston 1. Cette chambre ou cette colonne 2 est comparable à celle qui a été représentée sur la figure 1. Le conduit 23 ne joue pas le rôle de cylindre pour le piston 1, mais le rebord 24 de ce conduit est relié de manière étanche au piston 1 par l'intermédiaire d'une membrane de pulsion 25. Cette membrane de pulsion comprend une armature souple permettant sa déformation sans modification de l'aire de son enveloppe. Sa forme est celle d'un tore creux, sectionné par un cylindre dont l'axe correspond à celui du tore et dont le diamètre $D_1$ est supérieur au diamètre interne $D_2$ de ce tore, tout en étant inférieur ou égal au diamètre moyen $D_3$ du tore. L'un des rebords 26 de ce tore creux ainsi sectionné, est relié de manière étanche au rebord 24 du conduit 23, tandis que l'autre rebord 27 de ce tore creux est relié de manière étanche au piston 1.

Le pulseur représenté comprend aussi des moyens de compensation de la pression statique du fluide sur le piston 1 et dans la membrane de pulsion 25. Ces moyens de compensation comprennent, dans ce mode de réalisation, une membrane de compensation 31, reliée au piston de manière étanche, située à l'opposé de la membrane de pulsion par rapport au piston 1 et reliée également de manière étanche à un autre rebord 32 d'une autre partie 34 du conduit 23 ; le conduit 23 est interrompu entre les deux membranes. Dans ce mode de réalisation, le pulseur comprend en outre des moyens de pressurisation du volume 33 délimité d'une part, par la portion 34 du conduit 23 et, d'autre part, par le piston 1 et par l'intérieur 35 de la membrane de compensation 31 ; ce volume est rempli d'un fluide liquide ou gazeux et il est relié à des moyens pour soumettre ce fluide à une pression équivalente à la pression statique engendrée par le fluide contenu dans la colonne 2. Ces moyens sont constitués, de manière connue, par un ballon de pressurisation 15 relié à une conduite d'air comprimé 16, par l'intermédiaire d'une vanne de réglage de pression 17. La membrane de compensation 35 a la même forme et la même structure que la membrane de pulsion 25. Il est bien évident cependant, que sa dimension pourrait être différente de la dimension de la membrane 25.

Comme la membrane de pulsion 25, la membrane de compensation 31 comprend une armature souple permettant la déformation de cette membrane sans modification de l'aire de son enveloppe. Les armatures des membranes de pulsion et de compensation sont constituées par des armatures de pneumatiques de véhicules automobiles ou de camions.

Les membranes de compensation 31 et de pulsion 25, dans ce mode de réalisation, sont associées à des moyens qui permettent de minimiser et de conserver une valeur positive à la différence de pression $P_1$-$P_3$ entre l'intérieur 29 de la membrane de pulsion 25 et de l'extérieur 14 de cette membrane, lorsque le pulseur est en fonctionnement. Des moyens sont également prévus pour minimiser et conserver une valeur positive à la différence de pression $P_2$-$P_3$ entre l'intérieur 35 de la membrane de compensation 31 et l'extérieur 14 de cette membrane, lorsque le pulseur est en fonctionnement. Ces moyens sont constitués par une enceinte de pressurisation 28 qui entoure les membranes de pulsion et de compensation. Le volume 14 de cette enceinte est rempli d'un fluide liquide ou gazeux ; elle est reliée à des moyens qui permettent de soumettre le fluide qu'elle contient, à une pression inférieure ou égale à la plus faible pression engendrée par le fluide de la colonne 2, dans la membrane de pulsion et sur le piston, lorsque le pulseur est actionné. Ces moyens de pressurisation sont constitués par exemple, par un ballon de pressurisation 36, relié à une conduite d'air comprimé 37, par l'intermédiaire d'une vanne de réglage de pression 38.

En référence à la figure 3, on a représenté un autre mode de réalisation d'un pulseur conforme à l'invention. Les mêmes éléments portent les mêmes références sur cette figure et sur la figure 2. Selon cet autre mode de réalisation, le pulseur comprend des moyens de compensation de la pression statique ou fluide sur le piston 1 et dans la membrane de pulsion 25. Ces moyens de compensation de la pression statique sont constitués par un ou plusieurs vérins exerçant une pression sous le piston, égale à la pression statique du fluide de la colonne 2, sur le piston 1 et dans la partie interne 29 de la membrane 25. On a représenté deux de ces vérins 41, 42, disposés symétriquement par rapport à l'axe du piston et reliés à des moyens connus de pressurisation 48 ; Ces moyens de pressurisation permettent aux vérins d'exercer sous le piston une poussée égale à la pression statique du fluide dans la colonne 2. Ce pulseur comprend également des moyens qui permettent de minimiser et de conserver une valeur positive à la différence de pression $P_1$-$P_2$ entre l'intérieur 29 de la membrane 25 et l'extérieur 14 de cette membrane. Ces moyens sont constitués par une enceinte de pressurisation 28. Cette enceinte entoure la membrane de pulsion 25 ; elle est remplie d'un fluide liquide ou gazeux et elle est reliée à des moyens qui permettent de soumettre le fluide qu'elle contient à une pression inférieure ou égale à la plus faible pression engendrée par le fluide de la colonne 2, dans la membrane de pulsion 25 et sur le piston 1, lorsque le pulseur est actionné. Les moyens qui permettent de créer cette pression sont constitués par exemple par le volume d'huile 14 contenu dans l'enceinte 28, relié à un ballon de pressurisation 15, lui-même pressurisé par une arrivée 16 d'air comprimé, dont la pression peut être réglée par une vanne 17.

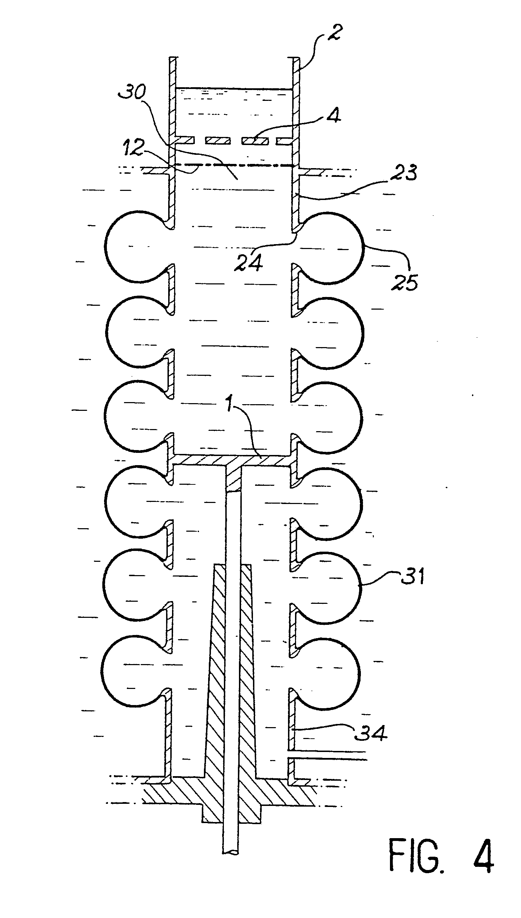

En référence à la figure 4, on a représenté de manière schématique un autre mode de réalisation d'un pulseur conforme à l'invention. Seuls ont été représentés sur cette figure le piston 1 et les membranes de pulsion et de compensation 25 et 31. Dans ce mode de réalisation, le pulseur comprend une pluralité de membranes de pulsion 25 et une pluralité de membranes de compensation 31. Ces membranes sont superposées de manière à être reliées entre elles de façon étanche ; la première membrane de la pluralité de membrane de pulsion 25 est reliée par l'un de ses rebords au rebord 24 du conduit 23, et l'un des rebords de la dernière membrane de cette pluralité de membranes de pulsion est reliée de manière étanche au piston 1. De la même manière, la première membrane de la pluralité de membranes de compensation 31 a l'un de ses rebords relié de manière étanche à la partie 34 du conduit 23, les autres membranes sont reliées entre elles de manière étanche et la dernière membrane de cette pluralité est reliée de manière étanche, par l'un de ses rebords au piston 1. L'utilisation d'une pluralité de membranes permet de diminuer les efforts exercés sur chacune d'elles. Il est bien évident que le nombre de membranes de pulsion et de compensation peut varier et que les dimensions de ces membranes peuvent être différentes.

Il est bien évident aussi que pour les pulseurs représentés sur les figures 2, 3, 4 il aurait été possible de disposer une membrane de séparation 12 à la base de la colonne 2. Cette membrane de séparation peut être constituée par un support souple en élastomère, revêtu d'une pellicule de tétrafluoréthylène. Elle est rendue nécessaire dans le cas où la membrane de pulsion 25 n'est pas revêtue d'un film anti-corrosion protégeant cette membrane de l'attaque de liquides corrosifs qui pourraient être contenus dans la colonne 2. Lorsqu'une membrane de séparation est utilisée, le volume 30 compris entre la membrane de pulsion 25, le haut du piston 1 et la membrane de séparation 12, est rempli d'un liquide. Ce volume est constant du fait de l'étanchéité réalisée grâce à la membrane de pulsion 25, entre le piston 1 et le rebord 24 du conduit 23. Le fait que ce volume soit constant est particulièrement important puisqu'aucun dispositif de compensation de fuite n'est à prévoir au niveau du piston ; en effet, comme indiqué plus haut, les pulseurs connus, qui font intervenir le déplacement d'un piston dans un cylindre, présentent des fuites qui doivent être compensées. Le pulseur de l'invention, lorsqu'une membrane de séparation est présente, agit à volume constant et permet de transmettre intégralement à la membrane 12, les efforts de pulsion créés par le déplacement du piston 1 et par la déformation de la membrane 25.

Le mouvement des fluides dans la chambre ou colonne 2 est assuré par la déformation de la membrane torique 25 et par le déplacement du piston 1, sans qu'il soit nécessaire de prévoir un dispositif de compensation de fuites autour du piston. La paroi de la membrane torique peut supporter des différences de pression de plusieurs bars ; de plus, lorsqu'un film anti-corrosion, non représenté sur les figures est appliqué sur la surface interne de la membrane de pulsion, il n'est pas nécessaire de prévoir une membrane de séparation à la base de la colonne 2.

Dans les modes de réalisation, représentés sur les figures 2, 3, 4, la forme de pulsion obtenue est identique à la montée et à la descente du piston ; des efforts identiques sont exercés sur les membranes, quel que soit le sens du déplacement et l'énergie à fournir pour le déplacement du piston est la plus faible.

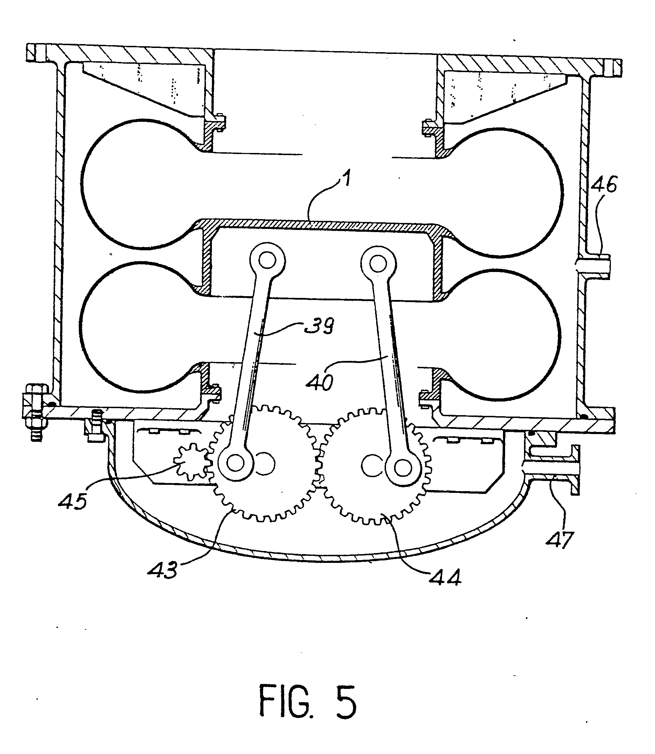

En référence à la figure 5, on a représenté de manière plus détaillée les moyens d'entraînement du piston 1. Ces moyens permettent d'animer le piston d'un mouvement alternatif linéaire. Ils sont constitués par un système bielle-manivelle qui est de préférence double et symétrique par rapport à l'axe de déplacement du piston. Il comprend au moins deux bielles 39, 40. Ces manivelles sont entraînées en rotation inverse l'une de l'autre par des roues dentées de synchronisation 43, 44, elles-mêmes entraînées par un pignon 45. Cet embiellage symétrique permet de supprimer les réactions latérales sur les membranes. On a également présenté sur cette figure des conduits 46, 47, reliés aux ballons de pressurisation 36 et 15, mentionnés plus haut.

Le piston du pulseur ne comporte pas de dispositif de guidage. En effet, le guidage du piston sur une trajectoire rectiligne est assuré par les membranes toriques qui, lorsqu'elles sont soumises à une pression intérieure supérieure à celle qui règne à l'extérieur du tore, tendent à occuper le plus grand volume autorisé par l'armature souple, mais non élastique qui les constitue.

Il en résulte que toutes les forces intérieures relatives à cette pression intérieure sont égales et normales à la paroi du tore, ce qui a pour conséquence que l'axe du tore est toujours perpendiculaire au plan du piston.

Les armatures des pneumatiques automobiles ou de camions sont des membranes toriques qui correspondent à la description de l'invention.

Il est bien évident que dans les différents modes de réalisation du pulseur conforme à l'invention, qui viennent d'être décrits en exemple, les moyens utilisés auraient pu être remplacés par des moyens équivalents, sans sortir du cadre de l'invention.

**Revendications**

1. Pulseur destiné à transmettre à un fluide contenu dans une chambre, à travers un conduit débouchant dans cette chambre, le mouvement alternatif d'un piston, comprenant au moins une membrane de pulsion reliée de manière étanche au piston et à un rebord du conduit, caractérisé en ce qu'il comprend en outre des moyens pour exercer une pression de compensation de la pression statique du fluide sur le piston et la membrane de pulsion, des moyens pour minimiser, au cours du fonctionnement du pulseur, la valeur de la différence de pression entre la pression exercée sur la paroi interne de la membrane, du côté du fluide, et la pression exercée sur la paroi externe de la membrane, la valeur de cette différence demeurant positive et la membrane de pulsion présentant la forme d'un tore creux sectionné par un cylindre dont l'axe correspond à celui du tore et dont le diamètre est supérieur au diamètre interne du tore, tout en étant inférieur ou égal au diamètre moyen de ce tore, de sorte que l'un des rebords du tore creux ainsi sectionné soit relié de manière étanche audit rebord du conduit et que l'autre rebord de ce tore sectionné soit relié de manière étanche au piston.

2. Pulseur selon la revendication 1, caractérisé en ce que ladite membrane de pulsion comprend une armature souple permettant la déformation de cette membrane sans modification de l'aire de son enveloppe.

3. Pulseur selon la revendication 2, caractérisé en ce que les moyens de compensation de pression statique comprennent au moins une membrane de compensation de pression de même forme et de même structure que la membrane de pulsion reliée de manière étanche au piston et à un autre rebord du conduit, à l'opposé de la membrane de pulsion par rapport au piston, des moyens de pressurisation du volume délimité d'une part, par le conduit, du côté de l'extrémité de ce conduit qui est situé à l'opposé de l'emplacement où ce conduit débouche dans la chambre et d'autre part, par le piston et par l'intérieur de la membrane de compensation, et des moyens pour minimiser, au cours du fonctionnement, la différence entre la pression exercée à l'intérieur de la membrane de compensation et la pression à l'extérieur de cette membrane, la valeur de cette différence demeurant positive.

4. Pulseur selon la revendication 3, caractérisé en ce que les moyens pour minimiser la différence de pression entre l'intérieur et l'extérieur de la membrane de pulsion et la différence de pression entre l'intérieur et l'extérieur de la membrane de compensation, sont constitués par une enceinte unique de pressurisation, entourant ces deux membranes.

5. Pulseur selon la revendication 4, caractérisé en ce que ladite enceinte unique est reliée à des moyens pour créer dans cette enceinte une pression inférieure ou égale à la plus faible pression engendrée par le fluide sur la membrane de pulsion, lorsque le pulseur est en fonctionnement.

6. Pulseur selon la revendication 3, caractérisé en ce que les moyens de pressurisation dudit volume délimité par le conduit, le piston et l'intérieur de la membrane de compensation, sont reliés à des moyens pour créer dans ce volume une pression équivalente à la pression statique engendrée par le fluide sur la membrane de pulsion.

7. Pulseur selon la revendication 2, caractérisé en ce que les moyens de compensation de pression statique du fluide sur le piston comprennent au moins un vérin relié à des moyens de pressurisation, permettant d'exercer sous le piston une poussée égale à la pression statique du fluide sur le piston et dans la membrane de pulsion.

8. Pulseur selon la revendication 7, caractérisé en ce que les moyens pour minimiser la différence de pression entre l'intérieur et l'extérieur de la membrane de pulsion sont constitués par une enceinte de pressurisation entourant la membrane de pulsion.

9. Pulseur la revendication 8, caractérisé en ce que ladite enceinte de pressurisation est reliée à des moyens pour créer dans cette enceinte une pression inférieure ou égale à la plus faible pression engendrée par le fluide sur la membrane de pulsion, lorsque le pulseur est en fonctionnement.

10. Pulseur selon la revendication 9, caractérisé en ce qu'il comprend une pluralité desdites membranes de pulsions superposées, l'un des rebords du tore creux sectionné formant la première membrane de ladite pluralité étant relié de manière étanche au conduit tandis qu'un autre rebord du tore creux sectionné formant la dernière membrane de ladite pluralité est relié au piston de manière étanche, les rebords en regard des membranes de ladite pluralité étant reliés de manière étanche.

11. Pulseur selon la revendication 6, caractérisé en ce qu'il comprend une pluralité desdites membranes de compensation, superposées, l'un des rebords creux du tore sectionné formant la première membrane de ladite pluralité étant relié de manière étanche audit rebord du conduit tandis qu'un autre rebord du tore creux sectionné formant la dernière membrane de ladite pluralité est relié de manière étanche au piston.

12. Pulseur selon l'une quelconque des revendications 1 à 11, caractérisé en ce que le mouvement du piston est commandé par des moyens aptes à animer ce piston d'un mouvement alternatif linéaire.

13. Pulseur selon la revendication 12, caractérisé en ce que le mouvement du piston est commandé par un système bielle-manivelle.

14. Pulseur selon la revendication 13, caractérisé en ce que ledit système bielle-manivelle comprend au moins deux bielles disposées symétriquement par rapport à l'axe du piston et entraînées en synchronisme par deux manivelles tournant en sens inverse.

15. Pulseur selon la revendication 14, caractérisé en ce que les armatures souples des membranes de pulsion ou de compensation sont constituées par des armatures de pneumatiques de véhicules automobiles ou de camions.

16. Pulseur selon la revendication 15, caractérisé en ce qu'une membrane de séparation est interposée entre le fluide et la membrane de pulsion, à l'emplacement où le conduit découche dans la chambre.

17. Pulseur selon la revendication 16, caractérisé en ce que le volume du conduit compris entre la membrane de pulsion et la membrane de séparation reliée au piston est rempli d'un fluide incompressible.

**Claims**

1. Pulsator for transmitting the alternating movement of a piston to a fluid contained in a vessel, through a conduit opening into the vessel, comprising at least one pulsation membrane hermetically sealed to the piston and to a rim of the conduit, characterized in that it comprises means for exerting a pressure compensating for the static pressure of fluid on the piston and the pulsation membrane, the pressure difference between the pressure on the internal face of the membrane, on the fluid side, and the pressure on the external face of the membrane being positive, the pulsation membrane having the form of a hollow torus cut through by a cylinder whose axis corresponds to that of the torus and whose diameter is greater than the internal diameter of the torus and less than or equal to the average diameter of the torus, one rim of the hollow torus thus cut through being hermetically sealed to the said conduit rim and the other rim of the cut through torus being hermetically sealed to the piston.

2. Pulsator according to Claim 1 characterized in that said pulsation membrane comprises a flexible sheath permitting deformation of the membrane without change of its surface area.

3. Pulsator according to Claim 2 characterized in that the means for compensating for static pressure comprises at least one pressure-compensation membrane, of the same form and the same structure as the pulsation membrane, hermetically sealed to the piston and another end of the conduit, on the opposite side of the piston from the pulsation membrane, pressurising means for the volume limited, on the one hand, by the conduit, by the side of the end of the conduit which is situated opposite to the position where the conduit opens into the chamber and, on the other hand, by the piston and the interior of the compensation membrane, and means for minimising during operation, the difference between the pressure in the interior of the compensation membrane, and the pressure on the exterior of said membrane, the value of this pressure difference being positive.

4. Pulsator according to Claim 3 characterized in that the means for minimising the pressure difference between the interior and the exterior of the pulsation membrane, comprises a single pressurisable compartment enclosing the two membranes.

5. Pulsator according to Claim 4 characterized in that said single compartment is connected to means for producing in said compartment, a pressure less than or equal to the lowest pressure of the fluid on the pulsation membrane during operation of the pulsator.

6. Pulsator according to Claim 3 characterized in that the means for pressurising said volume limited by the conduit, the piston and the interior of the compensation membrane, are connected to means for producing in said volume a pressure which is equal to the static pressure exerted by the fluid on the pulsation membrane.

7. Pulsator according to Claim 2 characterized in that the means for compensating for static pressure comprise at least one hydraulic cylinder connected to pressurising means, enabling exertion on the piston of a pressure equal to the static pressure of the fluid on the piston and in the pulsation membrane.

8. Pulsator according to Claim 7 characterized in that the means for minimising the pressure difference between the interior and the exterior of the pulsation membrane comprises a pressurisable compartment enclosing the pulsation membrane.

9. Pulsator according to Claim 8 characterized in that said pressurisable compartment is connected to means for generating in said compartment a pressure which is less than or equal to the lowest pressure of the fluid on the pulsation membrane during operation of the pulsator.

10. Pulsator according to Claim 9 characterized in that it comprises a plurality of superimposed pulsation membranes, one rim of the cut through hollow torus constituting the first membrane of said plurality being hermetically sealed to the rim of the conduit, and the opposite rim of the cut through hollow torus constituting the last membrane of such plurality being hermetically sealed to the piston, the remaining rims of the membrane of said plurality being hermetically connected.

11. Pulsator according to Claim 6 characterized in that it comprises a plurality of superimposed compensation membranes, one rim of the cut through hollow torus constituting the first membrane of said plurality being hermetically sealed to the said rim of the conduit and the other rim of the cut through hollow torus constituting the last membrane of said plurality being hermetically sealed to the piston.

12. Pulsator according to any one of Claims 1 to 11 characterized in that movement of the piston is governed by means adapted to provide the piston with an alternating linear motion.

13. Pulsator according to Claim 11 characterized in that the movement of the piston is actuated by a crank-connecting rod system.

14. Pulsator according to Claim 13 characterized in that said crank-connecting rod system comprises at least two connecting rods, symmetrically disposed about the axis of the piston driven in synchronisation by two cranks turning in inverse senses.

15. Pulsator according to Claim 14 characterized in that the flexible sheathes of the pulsation or compensation membranes are constituted by the sheathing of automobile or lorry tyres.

16. Pulsator according to Claim 15 characterized in that a separation membrane is provided between the fluid and the pulsation membrane located where the conduit opens into the vessel.

17. Pulsator according to Claim 16 characterized in that the volume of the conduit between the pulsation membrane and the separation membrane is filled with incompressible fluid.

**Ansprüche**

1. Impulsgeber, mit dem die abwechselnde Bewegung eines Kolbens auf ein in einer Kammer enthaltenes Fluid über eine in diese Kammer mündende Leitung übertragbar ist, wobei wenigstens eine Schwingungsmembrane auf dichte Weise mit dem Kolben und mit einem Rand der Leitung verbunden ist, dadurch gekennzeichnet, daß der Impulsgeber ferner Mittel, um einen Ausgleichsdruck des statischen Fluiddrucks auf den Kolben und die Schwingungsmembrane auszuüben, und Mittel umfaßt, durch die beim Betrieb des Impulsgebers die Größe des Druckunterschiedes zwischen dem von der Fluidseite her auf die innere Wand der Membrane ausgeübten Druck und dem auf die äußere Wand der Membrane ausgeübten Druck minimalisierbar ist, wobei die Größe dieses Unterschiedes positiv bleibt, daß die Schwingungsmembrane die Form eines hohlen Torus aufweist, welcher von einem Zylinder geschnitten ist, dessen Achse der jenigen des Torus entspricht und dessen Durchmesser größer als der Innendurchmesser des Torus, jedoch kleiner oder gleich dem mittleren Durchmesser des Torus der Art ist, daß einer der Ränder des derart geschnittenen, hohlen Torus dicht mit dem Rand der Leitung und der andere Rand des geschnittenen Torus dicht mit dem Kolben verbunden ist.

2. Impulsgeber nach Anspruch 1, dadurch gekennzeichnet, daß die Schwingungsmembrane eine nachgiebige Bewehrung aufweist, die die Verformung dieser Membrane ohne Änderung ihrer Hüllfläche ermöglicht.

3. Impulsgeber nach Anspruch 2, dadurch gekennzeichnet, daß die Ausgleichsmittel für den statischen Druck umfassen wenigstens eine Ausgleichsdruckmembrane derselben Form und derselben Struktur wie die Schwingungsmembrane, wobei diese auf dichte Weise mit dem Kolben und einem anderen Rand der Leitung auf der in bezug auf den Kolben der Schwingungsmembrane gegenüberliegenden Seite verbunden ist, Druckregelungsmittel mit einem Volumen, welches einerseits von der Leitung von der Seite des Endes dieser Leitung, welche der Stelle gegenüberliegt, wo diese Leitung in die Kammer mündet, und andererseits von dem Kolben und dem Inneren der Ausgleichsmembrane begrenzt ist, und Mittel, um beim Betrieb den Unterschied zwischen dem auf das Innere der Membrane und dem auf das Äußere der Membrane ausgeübten Druck zu minimalisieren, wobei der Wert dieses Unterschiedes positiv bleibt.

4. Impusiger nach Anspruch 3, dadurch gekennzeichnet, daß die Mittel zum Minimalisieren des Druckunterschiedes zwischen dem Inneren und dem Äußeren der Schwingungsmembrane und des Druckunterschiedes zwischen dem Inneren und dem Äußeren der Ausgleichsmembrane durch einen einzigen Druckregelungsring gebildet sind, welcher die zwei Membranen umgibt.

5. Impulsgeber nach Anspruch 4, dadurch gekennzeichnet, daß der einzige Ring mit Mitteln verbunden ist, um in diesem Ring einen kleineren oder gleichen Druck als den von dem Fluid beim Betrieb des Impulsgebers auf die Schwingungsmembrane ausgeübten kleinsten Druck zu erzeugen.

6. Impulsgeber nach Anspruch 3, dadurch gekennzeichnet, daß die Mittel zur Druckregulierung des Volumens, welches durch die Leitung, den Kolben und das Innere der Ausgleichsmembrane begrenzt ist, mit Mitteln verbunden sind, durch die in diesem Volumen ein Druck erzeugbar ist, welcher dem von dem Fluid auf die Schwingungsmembran ausgeübten, statischen Druck äquivalent ist.

7. Impulsgeber nach Anspruch 2, dadurch gekennzeichnet, daß die Mittel zum Ausgleichen des statischen Druckes wenigstens einen Zylinder-Kolbenantrieb umfassen, der mit den Mitteln zur Druckregelung verbunden ist und durch den auf den Kolben eine Stoßkraft ausübbar ist, welche gleich dem statischen Druck des Fluids auf den Kolben und in der Schwingungsmembrane ist.

8. Impulsgeber nach Anspruch 7, dadurch gekennzeichnet, daß die Mittel zum Minimalisieren des Druckunterschiedes zwischen dem Inneren und dem Äußeren der Schwingungsmembrane von einem Druckregelungsring gebildet sind, welcher die Schwingungsmembrane umgibt.

9. Impulsgeber nach Anspruch 8, dadurch gekennzeichnet, daß dieser Druckregelungsring mit Mitteln verbunden ist, durch die in diesem Ring ein Druck erzeugbar ist, welcher kleiner oder gleich dem kleinsten, beim Betrieb des Impulsgebers durch das Fluid auf die Schwingungsmembran erzeugten Druck ist.

10. Impulsgeber nach Anspruch 9, dadurch gekennzeichnet, daß er eine Vielzahl übereinandergeordneter, solcher Schwingungsmembranen aufweist, wobei einer der Ränder des geschnittenen, hohlen Torus, welcher die erste der Vielzahl von Membranen bildet, dicht mit der Leitung verbunden ist, während ein anderer Rand des hohlen, geschnittenen Torus, der die letzte der Vielzahl von Membranen bildet, auf dichte Weise mit dem Kolben verbunden ist, und daß die einander gegenüberliegenden Ränder der Vielzahl von Membranen auf dichte Weise verbunden sind.

11. Impulsgeber nach Anspruch 6, dadurch gekennzeichnet, daß er eine Vielzahl von übereinandergeordneten, solchen Ausgleichsmembranen aufweist, wobei einer der Ränder des hohlen, geschnittenen Torus, welcher die erste der Vielzahl von Membranen bildet, auf dichte Weise mit dem Rand der Leitung verbunden ist, während ein anderer Rand des hohlen, geschnittenen Torus, welcher die letzte der Vielzahl von Membranen bildet, auf dichte Weise mit dem Kolben verbunden ist.

12. Impulsgeber nach irgendeinem der Ansprüche 1 bis 11, dadurch gekennzeichnet, daß die Kolbenbewegung durch Mittel gesteuert ist, die geeignet sind, eine abwechselnde, lineare Bewegung des Kolbens hervorzurufen.

13. Impulsgeber nach Anspruch 12, dadurch gekennzeichnet, daß die Bewegung des Kolbens durch ein Kurbel-Kurbelstange-System erzeugbar ist.

14. Impulsgeber nach Anspruch 13, dadurch gekennzeichnet, daß das Kurbel-Kurbelstange-System wenigstens zwei symmetrisch in Bezug auf die Kolbenachse angeordnete Kubelstangen aufweist, die von zwei sich synchron im Gegensinn drehenden Kurbeln angetrieben sind.

15. Impulsgeber nach Anspruch 14, dadurch gekennzeichnet, daß die nachgebenden Bewehrungen der Schwingungs- oder Ausgleichsmembran durch Bewehrungen von Kraftfahrzeug- oder Lastkraftwagenreifen gebildet sind.

16. Impulsgeber nach Anspruch 15, dadurch gekennzeichnet, daß eine Trennmembran zwischen dem Fluid und der Schwingungsmembran an der Stelle angeordnet ist, an der die Leitung in die Kammer mündet.

17. Impulsgeber nach Anspruch 16, dadurch gekennzeichnet, daß das Volumen der Leitung, welches zwischen der Schwingungsmembran und der mit dem Kolben verbundenen Trennmembran eingefaßt ist, mit einem inkompressibelen Fluid gefüllt ist.

FIG. 1

0 013 640

FIG. 3

FIG. 2

FIG. 4

FIG. 5